(19) **Europäisches Patentamt**
**European Patent Office**
**Office européen des brevets**

(11) **EP 3 367 240 A1**

(12) **EUROPEAN PATENT APPLICATION**

(43) Date of publication:
**29.08.2018 Bulletin 2018/35**

(51) Int Cl.:
***G06F 9/50*** (2006.01)

(21) Application number: **17158173.9**

(22) Date of filing: **27.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Solutions and Networks Oy**
**02610 Espoo (FI)**

(72) Inventors:
• **ROELANDS, Marc**
**2018 Antwerp (BE)**
• **LLORCA, Jaime**
**Holmdel, NJ 07733-1661 (US)**
• **TULINO, Antonia**
**Holmdel, NJ 07733-1661 (US)**

(74) Representative: **D'Halleweyn, Nele Veerle Trees Gertrudis et al**
**Arnold & Siedsma**
**Bezuidenhoutseweg 57**
**2594 AC The Hague (NL)**

(54) **ALLOCATION METHOD AND ALLOCATION SYSTEM FOR ALLOCATING RESOURCES TO A DATA-BASED SERVICE**

(57) Allocation method for allocating network resources to a data-based service, wherein the data-based service comprises at least one service operation configured to receive operation input data and to generate operation output data based on said operation input data, said allocation method comprising: determining real-world information related to functionality of said service operation; estimating a volume of at least one of the operation input data and the operation output data of the at least one service operation based on said determined real-world information; estimating a network resource requirement of said at least one service operation based on said estimated operation output data volume; and allocating network resources to said at least one service operation based on said estimated network resource requirement of said at least one service operation.

FIG. 1

**Description**

The field of the invention relates to the allocation of resources to data-based services. Particular embodiments relate to the field of allocating resources to service operations of a data-based service.

Background

In general there is a trend towards cloud-based execution of services. Together with the Internet of Things and other big data trends, there is an evolution to the launching of arbitrary, long-living services acting more and more on live data streams. This implies that there will be many distributed data-intensive service instances, varying in sources processed as well as service-composing functions, so-called stream processing operators, and actuated data sinks, both displaying data as well as controlling physical devices, which will be demanded to be executed concurrently in a cloud-based network-distributed execution environment. This is a far more rich and varied set of services to be managed in the network or cloud, than what was traditionally the case in public telecom or enterprise cloud solutions, even when including current multimedia communication, broadcast and on demand content services.

In this context, the reduction of combined processing and transportation costs for a large pool of live data processing services is becoming critical to the business sustainability of the services and the network-distributed platforms on which they are executed. Considering that an arbitrary service pool can be represented and deployed as a dataflow graph, or a collection of graph variants, in which the vertices are stream processing operators and data streams are to be established among them, transforming input streams into output streams in each intermediate operator, the key issue becomes the overall problem of so-called optimal placement decision of stream processing operators, i.e. the decision of where in the network or cloud to execute each stream processing operator that is part of the service pool.

Within this overall problem, a particular problem is to estimate or predict the actual processing and transportation volume for each stream or flow, which are represented by edges of the service collection data flow graph, and each stream processing operator instance, which are represented by vertices of the service collection data flow graph, as needed for the placement algorithm in order to estimate viability and costs for each placement solution option.

Unlike with traditional telecom services, such as content delivery networks (CDNs), where stream volumes could be estimated by gross scale, e.g. by number of subscribers per region, by regional movie catalog profiles and the like, in combination with linear scaling across stream processing functions, the wide variety of services that is expected to emerge, and which is moreover to be launched in an ad-hoc fashion, cannot easily be pre-sized in terms of compute and transport volume needed, either on average or maximally, for their, also finer-grain, composing stream processing operators, hence, while implying a need for proper volume-aware placement, preventing placement from being cost-optimized in a properly volume-informed way.

Summary

The above described problems can be further illustrated by means of three simple data-based service examples in which the prior art placements algorithms would not lead to an optimal placement or allocation of resources.

**Exemplary service 1**

A video search service that leverages arbitrary infrastructural cameras, e.g. city or traffic cameras, or crowd-sourced cameras, e.g. smart phone cameras, worldwide to query for particular video content, e.g. for particular wild animals, yellow cabs, dangerous traffic situations, celebrities, etc. which service can be used by a service end user, who may also have a particular profiled content interest.

**Exemplary service 2**

A smart energy grid service controlling household appliance power use or an electrical vehicle charge/discharge controller according to grid energy price and availability schedule. For example, pricing may anticipate load behavior, and be correlated to forecasted home and/or car behavior. Likewise, energy availability fluctuations may be correlated to forecasted weather. Control processing can be anticipated to be needed for a particular group of households or vehicles.

**Exemplary service 3**

A standard range of communication services which are needed in case of a scheduled pop concert or mobile manifestation like a cycling or running event. This requires network provisioning of more local resources than are normally needed within the same area.

What these exemplary data-based services or service instances have in common, being generically representative for most data-intensive distributed services, is that they often incorporate stream processing steps of which the output stream volume has no deterministic relation to the input stream volume, such as e.g. those that filter streams based on content criteria, or that output streams combine stream content from multiple streams into one or more aggregate streams. In fact often, data-intensive services typically consist of a graph of multiple of such processing steps. Hence, stream volume estimation for making informed placement decisions for the consecutive processing steps of distributed data-intensive service pools is a highly challenging problem, moreover because the service pool may have many candidate implementation variants in terms of dataflow and stream operator choice that all need to be considered for the placement decision.

Existing cloud service placement algorithms assume knowledge of either average or maximum or peak client flow sizes. Using this knowledge, placement algorithms determine the amount of compute resources to be allocated to each service function at each cloud location and/or the amount of transport resources needed to route the service flows through the appropriate functions. In this context, existing algorithms can be classified in two groups:

- Placement only: these algorithms assume a given routing policy, e.g. shortest path routing, and compute the placement of service functions and the associated compute resource allocation in order to minimize the overall resource cost. These algorithms are based on variations of so called facility location algorithms and their approximations. These algorithms solutions are not able to capture specified relationships between functions, e.g. service chaining, and are not able to optimize the routing of service flows.
- Placement and routing: these algorithms jointly optimize the placement of service functions and the routing of service flows. These algorithms are based on variations of multi-commodity flow algorithms on a properly augmented graph with additional service chaining constraints. These algorithms are able to capture arbitrary service relationships and provide joint cloud and network resource allocation.

However, as stated earlier, the main limitation of these prior art algorithms is that they are based on assumptions, which are not accurate. These are for example the assumption of known client flow sizes, and the assumption that from these known client flow sizes all intermediate and source flow sizes within the service can be estimated based on just this client flow size estimate, e.g. assuming a linear relation. These are severely limiting assumptions for data-based services which act on live data streams which appear in an ad-hoc manner and of which the sizes and volumes and hence needed resources are hard to predict.

The object of embodiments of the invention is to provide an allocation method and allocation system for allocating resources to a data-based service which provide an improved allocation of resources as compared to the above described prior art methods, and which are applicable to data-based services which act on live data streams.

According to a first aspect of the invention there is provided an allocation method for allocating network resources to a data-based service, wherein the data-based service comprises at least one service operation configured to receive operation input data and to generate operation output data based on said operation input data, said allocation method comprising:

- determining real-world information related to functionality of said service operation;
- estimating a volume of at least one of the operation input data and the operation output data of the at least one service operation based on said determined real-world information;
- estimating a network resource requirement of said at least one service operation based on said estimated operation output data volume; and
- allocating network resources to said at least one service operation based on said estimated network resource requirement of said at least one service operation.

Embodiments of the invention are based *inter alia* on the insight that by taking into account real-world information related to functionality of the service operation a more reliable and accurate estimate of actual sizes of data, which is to be processed and transported within the data-based service, may be obtained as compared to prior art placement algorithms. Moreover, such real-world information which is based on actual observations of phenomena in the real-world, pertaining to the functionality of the service operation provides more relevant knowledge as compared to prior art allocation methods which make blind and often wrong assumptions regarding the frequencies and/or volumes of the input and output data that is to be processed or transported.

In other words, embodiments of the invention are based on the insight that the statistics of virtually all data streams and their volume are often derivable from the real-world phenomena they are observing.

The exemplary prior art services mentioned earlier illustrate the problem of lacking informed stream volume estimation for the consecutive processing steps of distributed data-intensive service pools.

The result of embodiments according to the invention is a more optimal placement according to given cost criteria, for which the actual run-time stream volumes, and hence costs, will thus be more closely matched to the real-world assumptions made. This allows anticipating and avoiding the need of resource scaling needing to be performed in expensive allocation places, and reducing the risk of needing re-placement or re-allocation at run-time, a so called hot migration, of the data-based service.

Although the allocation method has been described for allocation resources to a data-based service, it is clear to the skilled person that embodiments of the allocation method can be used to allocate resources to multiple data-based services, e.g. a collection of data-based services, mutatis mutandis.

According to an embodiment determining real-world information related to functionality of said service operation comprises determining at least one semantic concept which is related to functionality of said service operation.

This way, by the introduction of one or more semantic concepts, the functionality of the service operation can be efficiently modelled and/or predicted by determining real-world information concerning the respective one or more semantic concepts. Further, by using semantics the method may be easily updated or take into account new information.

According to an embodiment determining real-world information comprises determining a probability of the at least one semantic concept, and estimating the size of the at least one of the operation input data and the operation output data of the at least one service operation is based on said determined probability.

This way, predictions can be made regarding the frequency or volume of operation output data which are more accurate as compared to the assumptions made in the prior art. Moreover, this allows for volume estimations and/or frequency estimations to be made which are based on probabilities determined from real-world information. Whereas parameters such as size of the data may be determined based on a data structure as defined by service logic of the particular data-based service, parameters such as volume and/or frequency cannot be determined solely based on service logic. By determining real-world information, accurate estimates on the volume and/or frequency of operation output data can nevertheless be acquired.

According to an embodiment the at least one semantic concept comprises a plurality of semantic concepts related to the functionality of said operation and determining real-world information pertaining to the at least one semantic concept related to the functionality of said operation comprises determining a probabilistic relation between at least a first and a second semantic concept from among the plurality of semantic concepts. Estimating the volume of the at least one of the operation input data and the operation output data of the at least one service operation is then based on said determined probabilistic relation.

This way, direct and indirect relations or associations may be used to estimate the volume of the operation input data or operation output data. Semantic concepts, which at first seem to be unrelated, may however still influence each other, and therefore may be used to determine a probability of one or two of the semantic concepts occurring in particular circumstances or at specific locations.

According to an embodiment determining real-world information comprises determining a probabilistic relation between the at least one semantic concept and at least one geographical location.

The at least one semantic concept may have a relation to, and a probability distribution according to, the semantic concept of geographical location. This way real-world information may pertain to a specific area or location, and may contribute to an accurate estimate of data stream volumes. Network-locality of stream volume can often be related to the existing correlations among real-world data streams, e.g. by the association of geospatial coordinate ranges with network access topological locations. The at least one geographical location may refer to locations and/or areas in the real world with different dimensions and sizes. For example a geographical location may be a city, a town, a country, a house block, etc.

According to an embodiment, the data-based service comprises generating the operation input data based on real-world sensor data originating from at least one origin which is related to said at least one geographical location, and the allocation method comprises estimating the volume of at least one of the operation input data and the operation output data based on the determined probabilistic relation.

This way a direct relation between the operation input data and the semantic concept related to the functionality of the service operation is demonstrated. As stated earlier, depending on the origin of the real-world sensor data used by the data-based service, probabilities regarding the semantic concept may vary. By taking into account the origin of the real-world sensor data, or in other words the location where the real-world sensor data is acquired, additional real-world information can be obtained.

The origin of real-world sensor data is typically the location of a sensor which is positioned somewhere in the real-world. The origin of the real-world sensor data may be related to the at least one geographical location in different ways. For example, the geographical location may be a city, and the real-world sensor data may originate from a camera located in a street of said city. The real-world sensor data may also originate from multiple cameras which are spread across the city. The origin of the real-world sensor data may be related to a location in the network topology, therefore the origin of the real-world sensor data can be determined based on at least one of a geographical location and a topological location.

According to an embodiment, the allocation method comprises estimating a service latency requirement of the data-based service, and allocating network resources to the at least one operation service is based on said estimated service latency requirement.

This way, in addition to estimated resource requirements, also other service of quality related requirements such as a maximum allowed latency can be taken into account by the allocation method.

According to an embodiment allocating network resources comprises allocating at least one of available processing resources, transport resources and storage resources to said at least one service operation.

Taking into account, and differentiation between, different types of network resources such as the available processing, transport and/or storage resources allows for a more informed overall allocation of network resources. It is clear to the skilled person that the available resources may correspond to one or more network nodes which are available to the data-based service and which may comprise amongst others data centers, databases, processors, and the like.

According to an embodiment, the allocation method comprises:

- comparing the estimated resource requirement of the at least one service operation, with network resources which are available at a network node; and
- allocating resources network resources of said network node and network resources of at least another network node to the at least one service operation when the estimated resource requirements are greater than the available network resources at said network node.

This allows for a flexible and efficient way to allocate resources, which guarantees that none of the available network nodes have to deal with more processing than they are capable off. This way, the risk needing a hot migration is reduced.

According to an embodiment, the allocation method comprises:

- dividing functionality of the at least one service operation into at least a first sub-operation and a second sub-operation; and
- allocating resources of a first network node to said first sub-operation and allocating resources of a second network node to said second sub-operation.

This way, the allocation method can adapt to the available network resources. For example, when only network nodes with a limited resource capacity are available, this allows the allocation method to make sure that the functionality of the service operation within the data-based service can be provided. Moreover, this way the burden on "popular" or frequently requested network nodes and their corresponding network resources may be lowered.

The skilled person will understand that the hereinabove described technical considerations and advantages for method embodiments also apply to the below described corresponding system embodiments, *mutatis mutandis.*

According to a second aspect of the invention there is provided an allocation system for allocating network resources to a data-based service, wherein the data-based service comprises at least one service operation configured to receive operation input data and to generate operation output data based on said operation input data, said allocation system comprising:

- a real-world determination unit configured for determining real-world information related to functionality of said operation;
- an output estimating unit configured for estimating a volume of at least one of the operation input data and the operation output data of the at least one service operation based on said determined real-world information;
- a resource estimating unit configured for estimating a network resource requirement of said at least one service operation based on said estimated output data volume; and
- a resource allocating unit configured for allocating network resources to said at least one service operation based on said estimated network resource requirement of said at least one service operation.

According to an embodiment the real-world determination unit is configured for determining at least one semantic concept which is related to functionality of said service operation.

According to an embodiment the real-world determination unit is configured for determining a probability of the at least one semantic concept related to functionality of said at least one service operation, and the output estimating unit is configured for estimating the volume of the operation output data of the at least one service operation based on said determined probability.

According to an embodiment, the at least one semantic concept comprises a plurality of semantic concepts related to the functionality of said operation, the real-world determination unit is configured for determining a probabilistic relation between at least a first and a second semantic concept from among the plurality of semantic concepts, and the output estimating unit is configured for estimating the volume of the at least one of the operation input data and the operation output data of the at least one service operation, based on said determined probabilistic relation.

According to an embodiment, the real-world determination unit is configured for determining a probabilistic relation between the at least one semantic concept and at least one geographical location.

According to an embodiment, the data-based service generates the operation input data based on said obtained real-world sensor data originating from an origin which is related to said at least one geographical location, and the output estimating unit is configured for estimating the volume of at least one of the operation input data and the operation output data based on the determined probabilistic relation.

According to an embodiment, the allocation system further comprises a latency requirement estimating unit configured for estimating a service latency requirement of the data-based service, wherein the resource allocating unit is configured for allocating network resources to the at least one operation service based on said estimated service latency requirement.

According to an embodiment, the resource allocating unit is configured for allocating at least one of available processing resources, transport resources and storage resources to said at least one service operation.

According to an embodiment, the resource allocation unit is configured for:

- comparing the estimated resource requirement of the at least one service operation, with network resources which are available at a network node; and
- allocating network resources of said network node and network resources of at least another network node to the at least one service operation when the estimated resource requirements are greater than the available network resources at said network node.

According to an embodiment, the resource allocation unit is configured for:

- dividing functionality of the at least one service operation into at least a first sub-operation and a second sub-operation; and
- allocating resources of a first network node to said first sub-operation and allocating resources of a second network node to said second sub-operation.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above.

According to another aspect there is provided a data storage device encoding a program in machine-readable and machine-executable form to perform one or more steps of any one of the embodiments of the method disclosed above.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figure 1 schematically illustrates an exemplary embodiment of an allocation method for allocating network resources to a data-based service according to the invention;
Figures 2A and 2B illustrate exemplary graph representations of a data-based service;
Figures 3A and 3B illustrate further exemplary graph representations of a data-based service;
Figure 3C illustrates a graph representation corresponding with the graph representation according to figure 3A, wherein the graph is annotated with determined probabilities;
Figure 4 schematically illustrates an exemplary network node comprising network resources; and
Figure 5 schematically illustrates an exemplary embodiment of an allocation system for allocating network resources to a data-based service according to the invention.

Description of embodiments

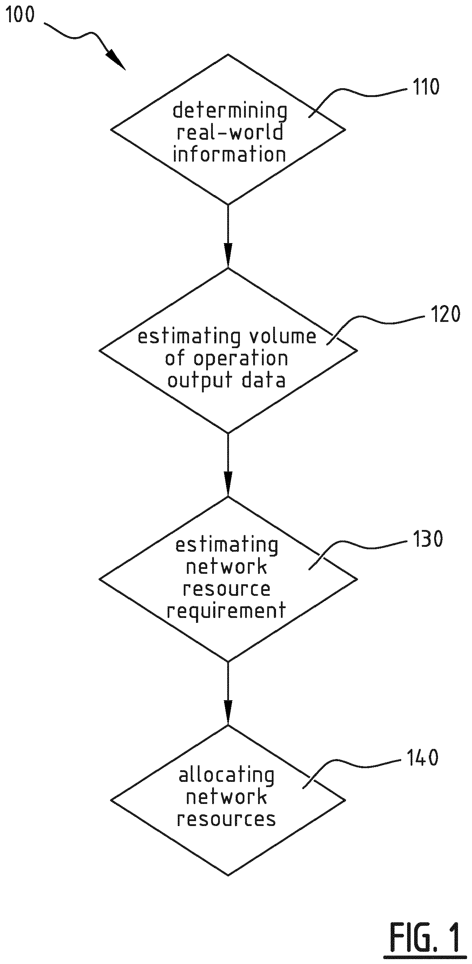

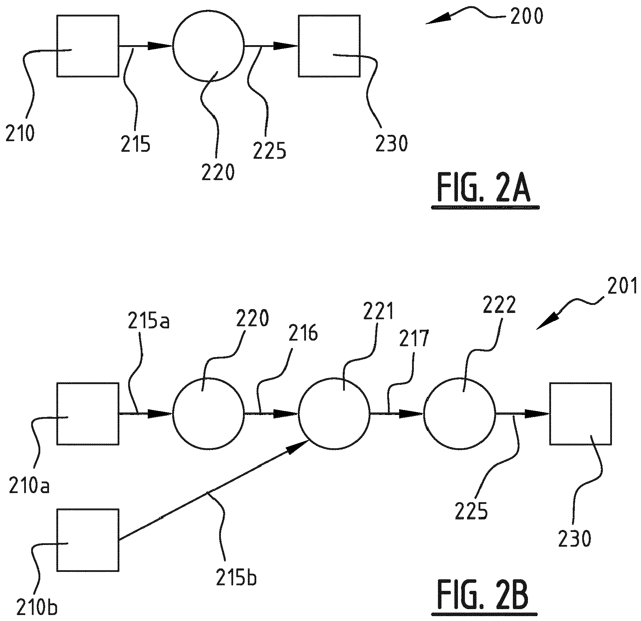

Figure 1 schematically illustrates an exemplary embodiment of an allocation method 100 for allocating network resources to a data-based service. A data-based service typically comprises one or more service operations which generate operation output data, based on operation input data which is received by the respective service operation. More information on data-based services and the representation of a data-based service and the corresponding service operation as a graph will be given in connection to figures 2A and 2B. The actual functionality of the service operation depends on, and is related to the nature of the respective data-based service. In the following description and in addition to a general wording which is applicable to a variety of data-based services, some illustrative specific examples of data-based services will be given. However, it is clear to the skilled person that application of embodiments of methods or systems according to the invention are not limited to the described illustrative specific examples, but are widely applicable to any other alternative data-based service.

The allocation method 100 of figure 1 allocates network resources to a data-based service. A data-based service can comprise one or more service operations, which means that the functionality provided by the data-based service involves one or more actual operations. A simple, straightforward data-based service may comprise only one service operation, while a more complicated data-based service may comprise multiple service operations. For the sake of simplicity, embodiments of the allocation method according to the invention may be described in relation to one single service operation. It is however clear to the skilled person that embodiments of the allocation method are applicable in a similar way to a data-based services which include a plurality of service operations, mutatis mutandis.

Figures 2A and 2B illustrate examples of graph representations of a data-based service. A graph representation of a data-based service may also be referred to with any one of the wordings "service graph", "data flow", "data flow graph", "data flow diagram", "logical graph" or simply "graph".

Figure 2A illustrates a simple example of a graph for a data-based service 200 which comprises a single service operation 220 which receives operation input data 215 from an input unit 210 and generates output data 225 based on the input data 215 and delivers the output data 225 to an output unit 230. A node or vertex in the graph, such as the service operation 220, may also be referred to with any one of the wordings "node", "vertex", "stream processing operator", "service operator", or "service operation". A link or edge in the graph, such as the operation input data 215 and operation output data 225, may also be referred to with any one of the wordings "link", "edge", "input/output stream", "input/output data stream" or "operation input/output data". The input unit 210 corresponds with the origin of the operation input data 215, which may be a database comprising the operation input data 215 or an actual device such as any kind of sensor, smart meter or the like which senses or generates the operation input data 215. The output unit 230 corresponds with the end point or destination of the operation output data 225, which may be a user device which is activated, actuated or otherwise uses the data-based service, or alternatively it may be any other autonomous device, such as for example a smart meter or a home automation control device or the like which uses the output of the data-based service.

Figure 2B illustrates a further example of a graph for a data-based service 201 which comprises three service operations 220, 221, 222 which provide a service or functionality between two input units 210a, 210b and an output unit 230. Operation input data 215a originating from input unit 210a is received by service operation 220 which generates, based on the operation input data 215a operation output data 216. Operation output data 216 is received by service operation 221 as operation input data 216, together with operation input data 215b originating from input unit 210b. Service operation 221 then generates operation output data 217 based on both received operation input data 216 and 215b. Subsequently according to the illustrated graph operation output data 217 is received by service operation 222 as operation input data 217 and service operation 222 generates operation output data 225 based on operation input data 217. Operation output data 225 is then delivered or provided to the output unit 230.

The representation of a data-based service 200, 201 as a logical graph is an abstraction away from the actual physical devices or physical media which will execute and factually embody the functionality of the service operations, e.g. processors or data centers, and of the links, e.g. wired or wireless network connections, within the graph.

The allocation method 100 as illustrated in figure 1 comprises step 110 of determining real-world information pertaining to at least one semantic concept related to functionality of said at least one service operation. This real-world information corresponds with any information pertaining to the "real world" which can for example be sensed by example services such as the ones in figure 2B, input units 210, 210a, 210b of a data based service 200, 201. Real-world information may be obtained or determined directly from the input units 210, 210a, 210b. In addition or alternatively, real-world information may be obtained from a database in which relevant real-world information is stored or may be obtained from a domain expert providing a world model which is relevant for the particular data-based service and the corresponding at least one semantic concept. Such a domain expert may be someone knowledgeable about the statistics of the occurrence of certain phenomena, semantic concepts, object observation likelihood, etc.

The wording "real world" is used to describe any system-external entity with which a data based service could interact by means of the executing system. This can thus pertain to the actual physical world in which e.g. humans live, or to other external systems, such as another service-executing system, e.g. to resources of which the current system cannot allocate service operations, due to administrative, authorative or other technical reasons, or one or a range of user appliances. As the allocation system described in the invention is particularly valuable in cases where system resources are distributed and networked, the case where the "surrounding" real world is also "wide" in a geographical sense is particularly relevant.

The wording "real world information", in the context of the invention, is used to describe any structured knowledge about the real world that can be modelled and stored as data for consumption and processing by a computer system, such as e.g. the explicit formulation of semantic and probabilistic relations among concepts, instances of concepts and observations of concepts as articulated to compose the real world. Sensors, in their broadest possible sense, acquire observation data about the real world, hence the collection and analysis of this sensor data can lead to the derivation of such "real world information". For example, it is clear to the skilled person that the frequency or volume by which the presence and/or occurrence of particular physical objects, concepts or phenomena are detected and/or observed via a sensor or camera in a particular geographical location (geolocation), can be stored as real world information.

In the context of the present invention, any such real world information that is related to the at least one semantic concept on which executed services act upon is of interest, even if such information may be rather indirectly related, but still exerts an influence on statistical property estimates used in the allocation method according to the invention.

Based on the functionality of the data-based service, or more in particular on the functionality of the service operation, it can be determined which real-world information may be relevant or useful for that particular service operation. One or more semantic concepts may be defined for a service operation. Such semantic concept typically has one or more attributes, wherein each attribute can have one or more values. For simple data-based services which encompass a small amount of semantic concepts, the relevant semantic concepts and their corresponding attributes, as well as relations amongst the semantic concepts may be listed in a semantic database. However, when a data-based service encompasses a big amount of semantic concepts, listing all of the semantic concepts, their attributes, and their relations is not feasible. In such a case, semantic concepts and their attributes may be defined by means of a schema or ontology, whereas the relations between different semantic concepts and their associated attributes may be determined based on probabilities, e.g. by means of a Bayesian network. The application of semantic concepts and/or probabilities will be discussed in more detail and illustrated with an example later on.

The allocation method 100 of figure 1 further comprises step 120 of estimating a volume of the operation output data 225 of the service operation 220, 222. The volume of the operation output data 225 may be estimated based on the determined real-world information and/or on the volume and/or nature of the operation input data 215, 217. By using real-world information related to the functionality of the service operation 220, 222 in combination with knowledge on the origin of the inputs of the service graph 210a and 210b, a more informed estimate of the volume of the operation output data 225 or output data stream 225 can be made as compared to prior art methods which assume a linear relation between operation input data 215,217 and operation output data 225 and thereby disregard the actual functionality of the service operation 222 and earlier service operations 220 and 221.

Depending on the nature of the data, the wording "volume" in respect of data may mean merely the "size" of the data, as well as an actual volume of data which comprises both a "size" and "frequency" of the data. In particular in the context of streaming data, size may be attributed to a used data structure, whereas volume (combination of size and frequency) cannot be determined solely based on the used data structure.

The allocation method 100 of figure 1 further comprises step 130 of estimating a network resource requirement of the service operation based on the estimated output data volume. Network resources may comprise transportation resources, storage resources and/or processing resources. For example, in relation to figure 2B, it may be estimated how much bandwidth would be needed or feasible to transport the operation output data 216 of service operation 220 to a following service operation 221. It may be further estimated, how much processing resources and/or storage resources would be needed to actually perform the functionality of the service operations 220 and 221, either based on the volume estimates of the step 120 or otherwise.

The allocation method 100 of figure 1 further comprises step 140 of allocating network resources to the service operation 220 based on the estimated network resource requirements. This step 140 builds a bridge between the graph representation of the data-based service 200, 201 and the actual physical deployment of the data-based service. Taking into account the network resources which are available to the data-based service, in combination with the estimated network resource requirements from step 130, in step 140 actual, physical resources are allocated to the service operation 220 and/or to the transport of input and/or output data streams. A logical graph is considered to be a representation of the functionality of a data-based service. In general, a data-based service provides a certain output based on a certain input. Between the input and output, a plurality of service operations may be present depending on the functionality of the data-based service. Depending on the functionality of the service operations, service operations may be mutually exchangeable, multiple service operations may be grouped together to form a single, more complex service operation, alternatively a single service operation may be split up into multiple more simple service operations, without changing the overall functionality of the data-based service. In other words, one data-based service can have multiple equivalent graph representations which represent the same overall functionality, but wherein the corresponding service operations are rearranged.

Step 140 of allocating network resources may comprise determining multiple equivalent graphs for a data-based service or for an operation service and allocating network resources according to one of the determined equivalent graphs, in dependence of the available network resources. For example, two processors may be allocated to jointly perform the functionality of a particular service operation.

In other words, embodiments of the method according to figure 1 allow to leverage, by injection thereof in the allocation method, which is also referred to as placement algorithm, additional knowledge about the real world. The real world represents concepts and parameters which can be sensed and/or actuated by sensors, actuators, etc.. First, deriving relevant statistics for stream sizing estimates on each edge between stream operator out of a probabilistic relational model of the considered application domain(s) wherein the service pool is specified. Followed by, feeding this knowledge as parameters into an existing placement algorithm, aiding the calculation of the stream sizing, in order to get to a more informed placement or allocation of resources.

The above described method steps 110, 120, 130 and 140 of allocation method 100 will become more clear in view of following specific examples.

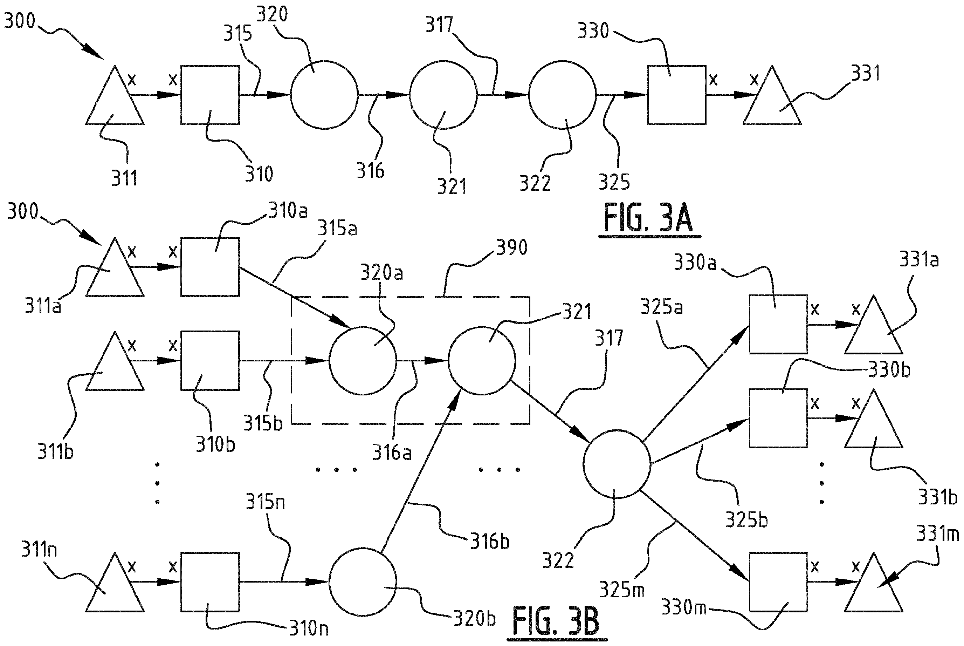

Figures 3A and 3B illustrate examples of graph representations of a data-based service according to "exemplary service 1" as previously described. More in particular, figures 3A and 3B show graph representations of a video search service that leverages arbitrary infrastructural cameras and/or crowd-sourced cameras all over the world, to query for particular video content. For example infrastructural cameras such as traffic cameras or safety cameras and/or crowd-sources cameras, such as smartphone cameras may be probed and queried for video content containing yellow cars. This service may be used by a service end user, who should receive images from yellow cars on his or her user device.

In the example of figures 3A and 3B, service instances or data-based services are represented as a collection of logical graphs of stream processing operators. As mentioned earlier graph collections are considered to be "logical" because they abstract away the actual physical instantiation that will eventually be decided upon in a later step in the overall allocation method or placement procedure.

These graphs purely describe the logical stream relations between the operators. In contrast, the physical deployment plan, which will be elaborated on later, will contain the actual operator instances to be deployed/placed and wired up, which will have to take up the actual network and/or cloud resources.

Figure 3A shows a logical graph that represents a data-based service which has the functionality of showing pictures of yellow cars to all car fans who signed up for the service. The data-based service is represented in terms of known types of stream processing operators 320, 321, 322. This means that an implementation of these stream processing operators 320, 321, 322 exists in a certain platform and that execution costs per volume of processed and produced input and output streams can be modeled and/or estimated.

The graph in figure 3A is a directed acyclic graph which provides an abstract representation which can be considered to be equivalent to the verbal description of the data-based service 300.

Input unit 310 represents a camera functionality, which produces video images 315. These video images 315 are provided to a service operation 320, which provides the functionality of a car filter. Car filter 320 will thus receive video images 315 as operation input data and will generate from these video images 315 video images containing cars 316 as operation output data 316. The video images containing cars 316 are provided to service operation 321, which provides the functionality of a color filter, more in particular a yellow filter. Yellow filter 321 will thus receive video images containing cars 316 as operation input data, and generate based thereon video images containing yellow cars 317 as operation output data 317. When video images are provided to the filters 320, 321 which do not contain cars or the color yellow, respectively, the generated operation output data based on those particular video images will be zero. The functionality of these service operations 320, 321 are examples where the prior art assumption of a linear relation between input and output data of a service operation is incorrect, and would lead to a poor placement or badly informed allocation of resources. Further in the data-based service 300 of figure 3A, the video images containing yellow cars 317 are provided to service operation 322, which has the functionality of mixing the provided yellow car video images 317 together as to create a collage image or mixed image of yellow cars as operation output data 325 which is provided to the output 330 which in this case might be the user device of a car fan who signed up for the data-based service 300.

In figure 3A, triangles 311 and 331 represent a location of the camera 310 and car fan device 330 respectively. This location may correspond with an actual geolocation or with a network point of presence (NPoP). The geolocation may be for example determined based on GPS or may be predetermined and stored in a database. The NPoP may for example correspond with an IP-address of a device, or an IP-subdomain of a datacenter or the like. The locations 311 and 331 provide a link between the data-based service 300 and the real world, which will be elaborated on later.

The graph of figure 3A is a simplified representation of the data-based service 300. It is clear to the skilled person that multiple cameras 310a, 310b, 310n may be involved in the data-based service 300 and, likewise, that multiple end user devices of car fans 330a, 330b, 330n may be signed up for the data-based service 300. Moreover, it is clear for the skilled person that multiple instances of the service operations 320, 321 and 322 may be involved with the data-based service 300. In other words, all available camera and all signed up car fan instances known to the system of the data-based service 300 will be involved in the actual service instantiation, which will lead to a scaling decision for the filter and mixer operators. In embodiments of the method according to the invention, the placement, i.e. the resource allocation, will be decided after a dimensioning phase for all involved operators.

Figure 3B illustrates one expanded graph for the simplified graph of figure 3A. In figure 3B n cameras 310a, 310b,..., 310n are illustrated, along with their corresponding locations 311a, 311b, ..., 311n wherein n is the total amount of cameras used by the data-based service 300. In a similar way, m end user devices 330a, 330b,..., 330m and their associated locations 331a, 331b, ..., 331m are illustrated. Also, multiple instances of car filter 320, 320a, 320b, multiple input video images 315a, 315b, ... 315n, multiple video streams comprising cars 316a, 316b and multiple mixed images comprising yellow cars 325a, 325b and 325m are illustrated. It is clear to the skilled person that this example is merely illustrative and that any other data-based service and/or any other amount of particular instances or data streams may be illustrated by an expanded graph as shown in figure 3B and that the principles of the invention will be applicable, mutatis mutandis.

The expanded graph in figure 3B also includes so-called pipeline reordering variants which are marked by rectangle 390. Rectangle 390 marks permutation equivalent service operations 320a and 321, which means that the order in which the service operations are executed may be changed, without changing the overall operation output data. On the contrary, although the actual output data might be the same, the required resources may vary depending on the order of operations. In other words, when the logical service description contains chains of operators that are interchangeable due to handling the same stream data type as one of the inputs and one of the outputs to it, any permutation of them in the service graph is logically equivalent. However, logically equivalent service graphs might eventually imply different stream volumes and hence transport and processing costs when chosen as the actually deployed variant.

Moreover, there could even be possible graph variants which use totally different sub-graphs containing different operator types, based on an equivalence in the real world. This will be further elaborated later on.

A collection of all variants of expanded, physical graphs which correspond to one and the same logical graph can be described as follows.

An arbitrary data-based service or service collection $\phi \in \Phi$ can be represented by a directed rooted graph $T(\phi)$, in which each vertex represents a function i E I. Function i is characterized by its set of inputs $Z(i)$ represented as incoming edges in $T(\phi)$ and the function output as the outgoing edge from vertex i.

Graph variants can then be expressed as multiple directed rooted sub-graphs in $T(\phi)$ that converge into a common output function which is allowed to have only one, and at least one, of the inputs active, representing the selection of one of the variants. Specific mathematical modeling will be elaborated on later.

The average request rate, either explicit or implicit, for service $\phi$ at destination d E V can be denoted as $\lambda^{d,\phi}$. This has not to be limited to a single service, but can rather cover a collection of requested services, which may be requested at different times, by different parties, or from different system interface instances, since the logical graph can represent such multiple services in one, partly overlapping, partly separated graph. Moreover, the stream processing operators named in the logical graph can be either directly the basic operators supported by the platform of the data-based service, or higher level concepts which can be translated into such primitives. This will be further elaborated in connection with modelling the real-world and determining real-world information.

According to an embodiment the step 110 of determining real-world information comprises establishing a world model, which is representative for real-world information which relates, directly or indirectly, to the functionality of a data-based service, or more in particular to the functionality of a service operation of the data-based service.

In an embodiment, establishing a world model comprise associating real-world events, parameters, observations and the like, with the functionality of a service operation and/or with a type of data that is comprised in operation input streams and/or operation output streams. To provide this association, semantic concepts may be used. More in particular semantic concepts may be defined which relate to the functionality of service operations comprised in the data-based service. In other words, defining a world model based on semantic concepts may lead to associating average stream volume expectations with a given stream type in its semantic service context, more in particular with a stream processing operator output or input type in the semantic context of a service. This will be further explained in connection with previously described data-based service example and the graph representation thereof as shown in figure 3A. In this case, a world model may be established as follows.

Denoting P(.|.) as conditional probability, "car_stream" and "yellowcar_stream" as a video stream type of which the content shows at least one car, respectively at least one yellow car, and NPoP being a network point of presence, like an IP-address of a device or an IP-subdomain of a datacenter, whichever makes sense as a placement granularity, following expressions can be obtained:

- P(car_stream|NPoP) for each possible or availabe NPoP, as a short notation for the likelihood that a stream of type "car_stream" is observable or detectable at the given NPoP;
- P(yellowcar_stream|NPoP) for each possible or available NPoP, as a short notation for:

    the likelihood that a stream of type "yellowcar_stream" is observed or detected at the given NPoP.

The notion of NPoP does not have to belong to the semantic world context over which the world model makes assertions. However, typically the sensing and actuating happens at particular NPoPs from the system's perspective. Moreover, any device used to observe or actuate the system-external world, being the real world, typically has one single or a determined set of associated NPoP. Hence, when a sensor or camera is observing a concept or phenomenon in a particular geo-area in the real world, this allows for the geo-area to be related to the NPoP of the particular sensing or actuating device, and hence probability can be aggregated over the geo-area for that particular NPoP.

In alternative embodiments where sensing or actuating is done in a non geo-related way, a conditional probability can still be expressed over the NPoP. The expression of conditional probabilities over NPoP is not hindered in situations were sensors and/or actuators observe and/or actuate overlapping parts of the real-world.

Establishing such a world model allows to estimate the stream volume sizing in the service graph of figure 3A straightforwardly as follows:

- Output stream 316 volume of car filter 320 = $\text{SUM}_{i:\ \text{all-sourceNPoPs-considered}}(\text{SIZE}(\text{car\_stream})*P(\text{car\_stream}|\text{sourceNPoPconsidered}(i));$ and
- Output stream 317 volume of yellow filter 321 = $\text{SUM}_{i:\ \text{all-sourceNPoPs-considered}}(\text{SIZE}(\text{yellowcar\_stream})*P(\text{yellowcar\_stream}|\text{sourceNPoPconsidered}(i));$

wherein SIZE(.) gives the fixed or average size of a stream of the type in the argument, typically expressed in megabytes per second (MB/s, MBps). The number corresponds to the fixed or average stream size given that the type is observed unconditionally.

Given that the argument of SIZE(.) in this formula is a stream type independent from the sum index, the factor is a constant that can equally well be written outside the summing of $P(.|.)$. By definition of the conditional probabilities which are considered here, summing over all possible or available NPoPs gives the probability of observing the type unconditionally, i.e. which can be expressed as a number in the interval [0, 1].

In order for these stream volume estimates to be automatically derivable in this exemplary embodiment, in addition to the conditional probabilities for each of the stream types over the NPoPs, it is preferred to have declared in the corresponding world model that, semantically, a car filter 320 followed by a yellow filter 321, or visa versa, on a video feed 315 is providing a stream 317 of type "yellowcar_stream". In this embodiment, such knowledge can also be applied to construct the initial logical service graph, when it would be determined from a higher level request to observe yellow cars.

The above described exemplary embodiment fits well the case where the data-based service 300 includes filters designed to selectively let pass video frames when certain filter conditions are met. This may lead to lower or even zero, i.e. full blocking when the filter conditions are not met, bitrates for filtered output video streams.

In the context of the above described data-based service, the corresponding service and probability meaning is about the observation of any number of yellow cars in each video frame. It is clear to the skilled person that in embodiments for alternative data-based services, e.g. a service of interest wherein a concept of multiple detected objects is needed, the semantic notion of "multipleyellowcar_stream" or e.g. "3yellowcar_stream" can be introduced in the corresponding world model. A exemplary semantically different service may for example want to count yellow car occurrences, and replicate a video frame for each yellow car detected. This requires more unique stream types. For such cases, it may be preferred to distinguish stream types "1car_stream", "2car_stream", etc., or "multicar_stream(n)" and "1yellowcar_stream", etc. However, although different amounts and different types of streams are defined, the same principle of establishing the world model can be applied for stream volume sizing:

- Output stream volume of "multicar filter" = $\text{SUM}_{i:\ \text{all-sourceNPoPs-considered, n: all number of occurrences in a frame}}$ $(\text{SIZE}(\text{multicar\_stream}(n)) * P(\text{multicar\_stream}(n)|\text{sourceNPoPconsidered}(i));$

wherein, $\text{SIZE}(\text{multicar\_stream}(n)) == n * \text{SIZE}(\text{camera\_stream}).$

In an alternative embodiment, the following could apply:

$\text{SIZE}(\text{car\_stream}) == \text{SIZE}(\text{yellowcar\_stream}) == \text{SIZE}(\text{camera\_stream})$, which essentially corresponds to the average bitrate of the camera video as is.

In the above described establishments of world models to determine real-world information one could easily determine or list the relevant semantic concepts which relate to the functionality of the data-based service. However, for a more general family of data-based services which cover many semantic concepts which can be observed in the world, it would be impractically tedious to exhaustively list all possible types of data streams that may occur in service dataflow graph specifications such as filter combinations or any other transformations or functionalities of service operations. In such cases, preferably a world model is established which expresses all relevant relations that are known between the related semantic concepts, such that properties for any type occurring in a service graph can be derived from these relations.

This can be realized by representing at least part of the world model as a so-called probabilistic relational model (PRM) or as a similar representation which combines following two aspects:

> 1) a schema or ontology of semantic concepts; and
> 2) a Bayesian network of probabilistic relations among the semantic concepts and more in particular among the values of the attributes of the semantic concepts.

The first aspect of a schema or ontology may express, in view of the already given example, that the semantic concept "car" has an attribute "color", which attribute may have multiple values such as "yellow". Further, the attribute may be represented as a key-value pair which would imply that a video stream comprising images of cars could be filtered or selected based on cars having the attribute color with value "yellow". In other examples the ontology may express that the semantic concept "camera" has an "IP address" and produces "video streams", in which video streams "cars" can be observed. It is clear to the skilled person that by using an ontology any thinkable semantic concept can be expressed in a world model, and thus that this approach is applicable to a wide variety of data-based services.

For the second aspect of a Bayesian network, a PRM or equivalent representation considers the set of parent probabilities $Pa(X.A) = \gamma(X.K.B)$ with K being an arbitrary slot chain of relations, and y being an aggregate operator. This way, a conditional probability distribution (CPD) $P(X.A|Pa(X.A))$ can be made expressible for each attribute value of each concept or class X, which expresses the likelihood of the value of each attribute A under the condition of every value of every parent attribute, i.e. under the condition of given values in all per the PRM known-to-exist relations. Such representation allows producing on demand so-called skeletons, which determine marginal probabilities for any stochastic variable in the model based on the assignment of particular attribute values. A text-book example of a PRM relation is a CPD for ranking students "low", "medium", or "high", based on the grades A, B or C they scored for the courses they have registered to. Based on this PRM relation, a skeleton can be generated on demand, containing marginal probabilities for the ranks of students for which the grades are observed. For example a student having all A's, or if an aggregate operator 'average' is defined in the PRM, a student that has *on average* a grade A over all registered courses, reducing the number of data points in the marginal PD, could have a likelihood of being ranked "high" of 0.7, of being ranked "medium" of 0.2 and of being ranked "low" of 0.1. The concept of PRMs and similar representations are considered to be known to the person skilled in the art.

In embodiments of the allocation method according to the invention, PRMs can be applied for the on-demand derivation of observation likelihoods related to the data streams and/or to the functionality of the service operation under the condition of the data sensing or actuating taking place at a particular NPoP. In other words, the word model may provide a correlation between the probability of a particular semantic concept being observed or sensed and a location or NPoP of the device, e.g. camera, observing the real world.

In the context of the previously described example of the data-based service that searches and displays yellow car images, the marginal PDs of P(car_stream|NPoP) and P(yellowcar-stream|NPoP) can be generated on demand from the PRM. This may arise if a service happens to be requested that uses the stream types 'car_stream' or 'yellowcar_stream', but might as well arise for any other concepts or stream types defined in the PRM.

The PRM can be direct or be rather indirect on deriving such PDs. In view of the example, PDs could be derived from the fact that certain geo-areas are declared in it to have a higher density of yellow cars, and that certain NPoPs are covering particular geo-areas. For example it may be considered to be known that in Manhattan any, or a particular, city camera will observe yellow cars in 50% of the video frames it generates. This might possibly still indirectly be derived from the fact that a lot of cabs can be found in Manhattan and that they are typically yellow. On the other hand, in rural areas around New York City this percentage might be 0.1%, which may be based on the relation of car density inside and outside the city, or for given camera orientations, etc.

It is clear to the skilled person that while many statistics may be known that are on first sight unrelated to the requested services and implied observed and transformed data streams, the relational knowledge of a PRM in a world model can be readily applied to derive relevant likelihoods for stream volumes of streams entering, exiting or being intermediates within a service dataflow graph, according to their semantic meaning in the PRM.

In view of the previous example, given the knowledge of the Manhattan yellow car density being fed to the PRM, it can for example be derived that:

- P(yellowcar-stream|NPoP) = 0.5 for NPoP = NPoP of Manhattan and 0.003 elsewhere; and that
- P(car_stream|NPoP) = 0.8 for any NPoP with mostly city cameras and 0.01 for NPoPs with mostly cameras not viewing roads.

In the above described examples, it has been described in detail how a data-based service can be modelled as a graph in a so called service model, and how real-world information can be determined by establishing a so called world model. It has also been described how, based on the real-world information, a size or volume of operation output data and/or operation input data of a service operation of the data-based service can be estimated. Beyond the semantic ontology and the PRM's probabilistic relations imposed on it, the world model may further comprise a set of templates, recipes, or instructions, which specify how properties of instances of these semantic concepts can be transformed into one another as data streams. This can be done by means of the given execution primitives which the execution environment supports while executing on data streams. This can be for example basic data stream processing operators, like "JOIN", "FILTER", etc. Thus, higher level concepts may be matched with such templates, allowing to translate them into lower level concept graphs, and ultimately into graphs of execution primitive operators.

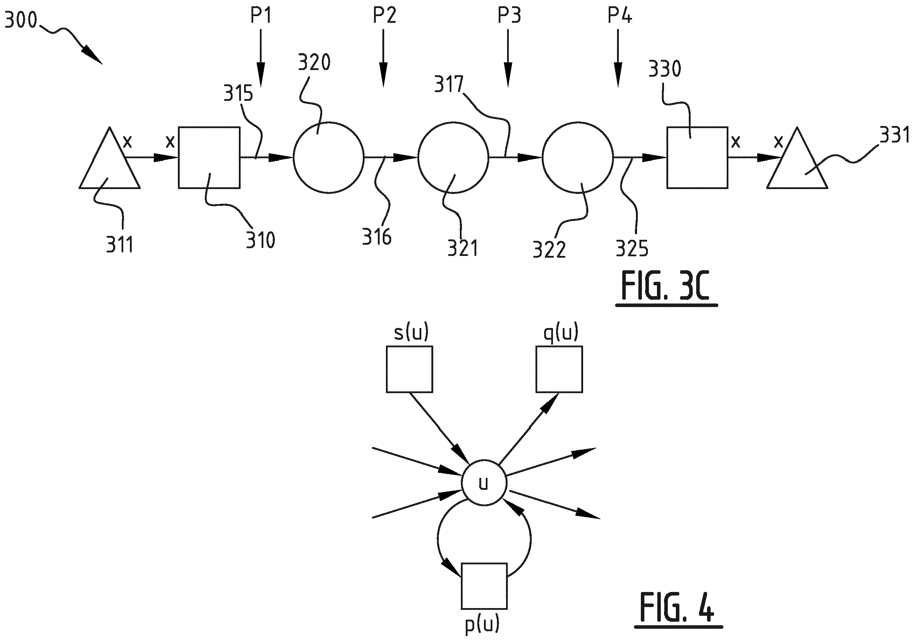

In the following description corresponding to figure 3C, it will be elaborated how the PRM can be used to derive the average stream volume estimates for an arbitrary service dataflow graph, and how this further can be used to instrument the placement algorithm parameters and thus to allocate resources to the data-based service and its service operations.

In figure 3C a graph representation is shown, which corresponds with the graph representation of figure 3A, with the addition that probabilities P1, P2, P3, and P4 are shown, which correspond with data streams 315, 316, 317 and 325, respectively. Probabilities P1, P2, P3 and P4 are based on probabilistic relations or probability distributions which are determined based on real-world information. These probabilistic relations may pertain to the at least one semantic concept related to the functionality of a particular service operation in combination with other semantic concepts related to the real-world such as the semantic concept of geographical location.

Based on this graph representation of the general service model as described earlier, the service collection of service operations which need resources allocated to them, can be walked by enumerating the service operations i. The output streams of each of these service operations has a meaning described in the world model as associated in it from the graph describing the source streams 315 and stream operators 320, 321, 322. This is at least the case for every service operation used in the graph, as service operations initially described logically in the domain of the world model are translated into service graph variant collections based on such associations. For example, as mentioned before for the yellow car detection in a video stream, a car filter 320 followed by a yellow filter 321 (or visa versa) on a video feed 315 is associated with a stream of type "yellowcar_stream".

Next to the world model by definition providing decompositions into candidate subgraphs for each service operation or function, into whatever primitives that are available as executable operator implementations, the semantic concept(s) of its output stream(s) thus always exists in the world model.

For each enumerated function i output stream there thus is, by construction of the service, a semantic concept in the world model associated. This procedure continues, for each function i output stream type, by executing following steps:

- Using the probabilistic relations as provided by a PRM, we enumerate all probabilistic relations that contain the considered stream type's "can_be_observed" attribute. For example, yellowcar_stream's attribute "*can_be_observed*" attribute may have a statistical relation to an attribute of another concept, such as the "*can_be_observed*" attribute of the "car" concept, as well as to the "city" or still another geographical relevant concept.

- Using the described Bayesian network and PRM techniques to produce derived conditional probabilities, a conditional probability of the form $P(<\text{stream type}>|NPoP)$, for each possible NPoP, can be derived as a short notation for "the likelihood that a stream of type <stream type> is observable/detectable at the given NPoP". Thus the shorthand notation denotes a stochastic property of the "*can_be_observed*" attribute of the stream type concept. Using the Bayesian network techniques, this will provide a result taking into account the probabilistic relations expressed directly or indirectly for the concepts that are (known to be) involved. In the rare case that there are no relevant relations related to the concept, either directly or via any of its composing concepts as seen in the subgraphs, $P(<\text{stream type}>|NPoP)$ will just be equal for any NPoP range chosen, thus thereby equaling $P(<\text{stream type}>)$ divided by the total number of available NPoPs in the system.

- The external input streams 315, also considered to be source streams, determine the range of NPoPs to be considered for the concept in the service context, as all sources, as well as all sinks and/or destinations for the service or service collection have an associated NPoP.

- Summing over the range of NPoPs used, annotate each function i output can be annotated with the marginal probability value for the stream type in the observation context that the service graph prescribes.

It is thus clear that this procedure can be applied to arbitrary data-based services, including their graph variants, or aggregated pools of service instances. The resulting probability annotations are illustrated in figure 3C, wherein P1 represents $P(\text{camera\_stream}|NPoP)$, P2 represents $P(\text{car\_stream}|NPoP)$, P3 represents $P(\text{yellowcar-stream}|NPoP)$ and P4 represents $P(\text{carfanscreen\_stream}|NPoP)$.

From the above, it is clear to the skilled person how real-word information may be determined in step 110, how the size or volume of operation input/output data may be estimated according to step 120 based on the real-world information, and how network resource requirements can be estimated according to step 130. Step 140 of allocating network resources to a service operation based on estimated network resource requirements of that particular service operation may now be executed.

In addition to the data-based service and corresponding service operations which have to be deployed, also the actual networking and processing resources onto which the service operations of the data-based services are to be placed needs to be described. In other words, in order to allocate resources efficiently, the available resources should be estimated and/or modelled. The available network resources can be modelled it as a resource graph of network interconnected processing and/or storage resources, for which cost parameters per unit of transport and/or processing may be given.

According to an embodiment, the cloud or computing network can be modeled as a directed graph $G = (V,E)$ with $n = |V|$ vertices and $m = |E|$ edges representing the set of network nodes and links, respectively. In the context of a distributed cloud network, a node may represent a distributed cloud location, in which service functions/operators can be instantiated, while an edge may represent a virtual link, for example an IP link, between two cloud locations.

According to an embodiment, a network node can be further augmented as illustrated in figure 4. In figure 4, $p(u)$, $s(u)$, and $q(u)$ denote the processing unit, source unit, and demand unit at network node $u$, respectively. The resulting cloud-augmented graph may be denoted by $G' = (V', E')$, where $V' = V \cup V^{pr}$ and $E' = E \cup E^{pr}$, with $V^{pr}$ and $E^{pr}$ denoting the processing unit nodes and edges, respectively.

For such an elaborated network resource representation, costs can be modeled as:

- A service operation i is characterized by its resource efficiency $\eta_i$ in resource units, e.g., VMs or server resource occupancy, per flow unit. This may be computed, for example, as the ratio between the resource requirement in resource units and the capacity in flow units of the VM for service operation i. The cost per resource unit at network node u is given by $w_u$. A network node u has capacity $c_u$ in resource units.
- Each link or edge, for the unique transport function it performs, has a certain capacity $c_{uv}$, in flow units, and a cost per flow unit $w_{uv}$.

Based on the above described network resource model and cost model, resources may be allocated to service operations in a manner which optimizes the cost model. In addition, embodiments of the method according to the invention comprise determining from all equivalent graph representations corresponding to a particular data-based service, a preferred equivalent graph which preferred equivalent graph representation might lead to a more efficient allocation of network resources as compared to other equivalent graphs. In other words, these embodiments might jointly optimize the placement of service functions and the routing of service flows. This is described in more detail below.

As was already illustrated in figures 3A and 3B, preferably a number of instantiation variants of a logical dataflow graph are considered before the actual allocation of resources, the so-called placement, occurs. Beyond the graph variants that reorder pipeline or substitute sub-graphs with alternatives, also the so-called scaling variants can be taken into account. For example, this may me preferred when an expected stream input and output volume for a particular stream operator are estimated or known, and when the processing, streaming or storage requirements of that stream operator appear to require a larger compute, transport or storage capacity than is available in a single NPoP of the network topology. It is clear to the skilled person that this can be any NPoP corresponding to the desirable placement granularity. So the NPoP may for example correspond to machines with IP addresses, entire datacenters or any other network-topological unit of resource hosting.

While stream volume overloading of an NPoP-placed stream operator may occur dynamically during service execution, here the pre-execution dimensioning or pre-scaling is considered, wherein the world model probability annotations of the service graph, and variants thereof, derived in the previous part of the description allow to estimate the average or likely maximum stream volumes. Quality assurance requirements for particular service instances may justify doing a pre-scaling to cope with not just average stream volume expectations but rather a factor higher, based on for example a standard deviation or other variance metrics included in the world model, allowing to estimate that stream volumes will most likely stay below a particular maximum reservation volume at all times. This way, the risk for needing a re-placement or re-allocation at run-time, a so-called "hot migration", is reduced.

Based on these stream volumes, the resource needs of the stream operators taking in and producing the streams can be estimated, for example based on previous testing of the stream operator with various input and output stream volume combinations.

As earlier described, real-world information may be determined by establishing a world model. From this world model, sizes or volumes of input and/or output data streams of service operations may be estimated, from which the required network resources can be estimated. Based on the world model-derived required stream operator resource needs, it can be determined whether available NPoPs are able to provide all or only part of the required resources or desired resources when a buffer of resources may be taken into account to reduce the risk of hot migration as discussed above. The step of allocating network resources to a service operation may therefore comprise selecting multiple NPoPs for hosting that service operation. According to an embodiment, allocating network resources comprises splitting the functionality of a single logical stream operator into multiple physical stream operator instances, being the actual network resources, such that each of the physical stream operator instances can provide a part of the required network resources.

This can be done as follows.

As an onset, the implementation definitions, i.e. executable computer code, for each operator that may require scaling, are made in a scale-ready way. This means that they are provided in such a way that a "divide & conquer" algorithmic approach is supported for the scaling, as it would be for automated parallelism.

Given that the operator function **h** is specified by:

- a function version **f(x)** for a minimal, or at least subset, volume of concurrent streams **x** for which **h(x) = f(x)** can be calculated as operator output; and
- an associative operator **g** by which higher stream volume cases of **h** can be graph-constructed as **h(x ++ y) = g(h(x), h(y))**, with **++** denoting an arbitrarily extended and/or partitioned set of streams, so that the subsets **x** and **y** are either the minimal or subset volume usable in **f** or require the further recursive calculation of **h** via **g,** it can be arbitrarily scaled to the minimal or subset volumes of the inputs desired.

The above described approach can be applied for any operator **h** for which at least one leftward and one rightward definition is known, according to the Third Homomorphism Theorem. Techniques for constructing the homomorphic definition above from such two definitions, as well as further basic knowledge on parallel processing are considered to be known to the skilled person.

A special example case of a homomorphic definition as described above is the simplified recursive definition of **h** where **f** can be applied to at least two of the output streams or stream sets, i.e. **g** equals **f** applied to the set of **g**'s arguments. The logical overall operator h can then be substituted with one out of a range of possible graphs that recursively and/or fractal-wise aggregates the total volume of input streams for **h.**

In general, also for the general homomorphic case, a range of possible graphs can be produced as a scaled substitution for the logical operator which can be systematically enumerated as any subgraph variants as where already to be considered in the logical graph. For example, for a version of f that takes only two input streams any intermediate or mix among three extreme graph archetypes can be constructed, i.e. a leftwards or rightward tree adding a new input stream with each stage of f until all input streams are used. This leads to a full serialization in time of the needed processing. Alternatively a 'balanced', maximally paralleled input aggregation by pairwise using the inputs can be applied, followed by consecutive pairing phases until all inputs are aggregated.

The above can also be interpreted to correspond to a map-reduce variant by considering **x** and **y,** or **h(x)** and **h(y),** as a partition (map) of the inputs of a particular stage and **g** as a reduce step aggregating partial results.

The above exemplary embodiments can deal with scaling for high input volumes. Similar reasoning and techniques can be applied for the generation of high volumes of unique output streams. This can be done by using an operator defined in a similar homomorphic form, using **p** to calculate the minimal or subset volume of final output streams $h_{1..n}(x) = p_{1..n}(x),$ and applying **q** for the recursion on f: $h_{1..n}(x) ++ ...++ h_{n(m-1)..nm}(x) = q_{1..m}(h_1(x)) ++ .. ++ q_{1..m}(h_n(x)),$ where the subscript index, or set of indexes, denotes the minimal or subset unique output stream volumes, or set of those, respectively.

It is clear to the skilled person that the same principle can be applied for scaling an operator for simultaneously high input and high output stream volumes. An example of such scaling, for the particular example of the operator being a discrete Fourier transform (DFT) with n input streams and m output streams, is the Cooley-Tukey fast Fourier transform (FFT) which allows to scale to arbitrarily large n and m.

As a result of the above operator definition, each logical operator in the service graph can be decomposed into a range of possible subgraph variants, down to the smallest scale available in the definition. This further extends the number of service graph or subgraph variants that need to be considered for the consecutive placement and allocation of network resources.

According to a further embodiment, a lower bound for stream volumes may be considered to limit the number of variants. This is a reasonable approximation if the processing or transport volumes involved are much smaller than the allocation granularity considered for the processing and transport resources. The latter may be set to a larger numbers to obtain economies of scale at the particular resource level.

World model volume estimate labeling of the expanded service graph can proceed as earlier described, regardless of how extensive the scaled variants are. Note that with the scaling to lower volumes also operators and streams become more local to a particular range of NPoPs. Hence, varying estimates per NPoP dependency become more apparent in the different estimates, implying that scaling may eventually also be localized. This might be obtained by including this finer-grain set of P(y) values in the placement or allocation optimization formulation, as will be further discussed below.

Based on the volume estimates, a check can be done for each operator in the graph on whether it is it can be placed or whether resources can be allocated within the limits of the available candidate resources. The according limits may moreover be uniform across multiple places. Such heuristic may serve as an alternative means to limiting, a priori, the number of variants passed on to the placement algorithm, as again the 'depth' of scaling can be limited in this way.

After the steps of translating the logical service graph, which comprises its variants collection, into its scaled-out variants collection, and annotating it with the world model-based stream volume estimates, a placement algorithm can take in this enriched collection for finding the optimal variant with respect to average resource cost spending minimization.

For that purpose, the problem can be formulated as a min-cost multi-commodity-chain network flow problem on the cloud augmented graph G', representing the full resource cost and capacity structure of the underlying infrastructure, as earlier described in connection with figure 4.

In the cloud augmented graph G', the cost and capacity of link (u, p(u)), (p(u), u), (s(u), u), and (u, q(u)) can be represented as $w_{u,p(u)} = w_u$, $c_{u,p(u)} = c_u$, $w_{p(u),u} = 0$, $c_{p(u),u} = \infty$, $w_{s(u),u} = 0$, $c_{s(u),u} = \infty$, $w_{u,q(u)} = 0$, $c_{u,q(u)} = \infty$, respectively. In the multi-commodity-chain network flow model, a commodity is uniquely identified by the triplet (d, $\phi$,i), which indicates that commodity (d, $\phi$, i) is the output of function i, used to meet the demand of client d for service $\phi$. We use S($\phi$) and q($\phi$) to denote the input or source commodities and output flows of service $\varphi$, respectively. In an embodiment, the use of the triplet is preferred, since a given function can be used for different services and different destinations, e.g. users of instances of the same service, or multi-output services, as a service collection typically would contain.

Following flow variables may be defined:

- Virtual flows: f (d, $\phi$,i) indicates the fraction of commodity (d, $\phi$, i) on edge (u, v), i.e. the fraction of flow output of function i carried and/or processed by edge (u, v) for service $\phi$ and client d.
- Actual flows: $f_{uv}$ indicates the total flow carried and/or processed by edge (u, v).

Taking into account the above, the optimization problem may be formulated as: min

$$\sum_{(u,v)\in\mathcal{E}'} w_{uv} f_{uv} \tag{1a}$$

s.t.

$$\sum_{v\in\mathcal{V}'} f_{vu}^{(d,\phi,i)} = \sum_{v\in\mathcal{V}'} f_{uv}^{(d,\phi,i)} \qquad \forall u \in \mathcal{V}', d, \phi, i \tag{1b}$$

$$f_{p(u),u}^{(d,\phi,i)} = f_{u,p(u)}^{(d,\phi,j)} \qquad \forall u \in \mathcal{V}, d, \phi, i \neq \mathcal{S}(\phi), j \in \mathcal{Z}(i) \tag{1c}$$

$$\sum_{(d,\phi,i)} f_{uv}^{(d,\phi,i)} \lambda^{d,\phi} R^i \eta^i \leq f_{uv}^{\mathcal{U}} \qquad \forall (u,v), i \in \mathcal{U} \tag{1d}$$

$$\text{multicast actual flow computation} \leq f_{uv}^{\mathcal{M}} \qquad \forall (u,v), i \in \mathcal{M} \tag{1e}$$

$$f_{uv}^{\mathcal{U}} + f_{uv}^{\mathcal{M}} \leq f_{uv} \leq c_{uv} \qquad \forall (u,v) \tag{1f}$$

$$f_{s(u),u}^{(d,\phi,i)} = 1 \qquad u \in s(\phi), d, \phi, i \in \mathcal{S}(\phi) \tag{1g}$$

$$f_{u,q(u)}^{(d,\phi,i)} = 1 \qquad u \in d(\phi), d = u, \phi, i = q(\phi) \tag{1h}$$

$$f_{uv}^{(d,\phi,i)} \in [0,1] \qquad \forall (u,v), d, \phi, i \tag{1i}$$

It is thus an objective to minimize the overall resource operational cost, which is approximated in this case as linear load-proportional cost, described by equation (1a). Although this approximation is often sufficient, it is clear to the skilled person that, alternatively or in addition, a weighting according to a more complicated function of $f_{uv}$ can be devised. Equation (1b) describes classical flow conservation constraints applied to all nodes in the augmented graph. Equation (1c) describes the service chaining constraints.

Constraints (1d) compute the total actual flow associated to unicast functions at a given cloud network location. Constraints (1e) compute the total actual flow associated to multicast functions at a given cloud network location.

The inequalities in (1d) and (1e), and the first inequality in (If) may be equalities (=).

Equation (If) describes the cloud network capacity constraints.

Equations (1g) and (1h) are source and demand constraints, whereas equation (1i) indicates the fractional domain of virtual flow variables.

In equation (1d), $R^1$ denotes the average size of the flow output of function i. As previously described, this value is computed based on the statistical information from the system-external world derived from the PRM as according to the world-model approach described above. Let function i be defined by the mapping function $g_i$: y -> z , with y an element in the subset $g_i^{-1}(z)$ of $O^{|Z(i)|}$, i.e. a vector of input stream instances determining which particular NPoPs are to be considered for the statistics of the output z of function i, and z an element in the collection O, with O denoting the set of content/information objects in i's flow output. Then following expression, with vector y notated as $\bar{y}$, applies:

$$R^i = \sum_{z \in \mathcal{O}} \sum_{\bar{y} \in g_i^{-1}(z)} P(\bar{y}) r^i(z, \bar{y}), \tag{2}$$

wherein the marginal distribution P(y) can be computed from the PRM. The quantity $r^i(z,y)$ denotes the size of the digital representation, e.g. video frame, of z when it is created from input y via function i.

As stated earlier, there may be multiple ways of implementing a particular function or set of functions, either because of existing variants known in the world model, or as scaling variants, and in the step of allocating resources the variant that leads to minimum costs should be picked. This may be modelled by representing the different variants as multiple paths in the service graph and by modifying the service chaining constraint (1c) for the common function at which the multiple variants converge. This way, instead of all the inputs only one of the inputs, corresponding to the output of each of the service variants, is required:

$$f_{p(u),u}^{(d,\phi,i)} = \sum_{j \in \mathcal{Z}(i)} f_{u,p(u)}^{(d,\phi,j)} \qquad \forall u \in \mathcal{V}, d, \phi, i \neq \mathcal{S}(\phi)$$

Note that this works even if flows are fractional, allowing portions of the input flow to go via different service graph variants. According to an embodiment, the formulation could also be restricted to forcing picking one single variant.

According to a further embodiment, the step of allocating resources is based on other service requirements such as maximum end-to-end service latency. For example, the maximum end-to-end latency allowed for the delivery of service $\phi$ at destination d may be noted as $H_{d,\phi}$.

The delay associated with a particular commodity (d,o,i), computed as the sum of the delay associated with the transport and processing of (d, $\phi$, i) flows may be denoted as $\delta^{d,\phi,i}$ and calculated as:

$$\delta^{d,\phi,i} = \sum_{(u,v) \in \mathcal{E}'} f_{uv}^{d,\phi,i} h_{uv} \quad \forall d, \phi, i.$$

$\delta^{d,\phi,i}$ may be used to denote the aggregate delay associated with commodity aggregate delay associated with commodity (d, $\phi$,i), computed as the sum of the local delay, $\delta^{d,\phi,i}$ plus the maximum across the aggregate delays of all of its input flows $\delta^{d,\phi,i}$ $\forall j \in Z(i)$, as:

$$\delta_{ag}^{d,\phi,i} = \delta^{d,\phi,i} \quad \forall d, \phi, i \in \mathcal{S}(\phi),$$

$$\delta^{d,\phi,i} + \delta_{ag}^{d,\phi,j} \leq \delta_{ag}^{d,\phi,i} \quad \forall d, \phi, i, j \in \mathcal{Z}(i).$$

The aggregate delay associated with the delivery of final commodity q($\varphi$) $\in$ I at destination d E V is constrained to be no larger than the maximum delay allowed by the service level agreements ( SLAs).

$$\delta_{ag}^{d,\phi,q(\phi)} \leq H_{d,\phi} \quad \forall d, \phi.$$

According to a further embodiment, the allocation method further comprises a step of using the estimated volumes of operation input or output data to provide in a faster more efficient way of allocating resources. In order to speed up the solving of the extended placement algorithm, especially in the case where only an approximately optimal placement is required, the World Model-based stream volume estimates provide the potential for a more effective traversal of the optimization problem search space. This might be especially beneficial, assuming that cost saving will not dramatically improve anymore, and that the calculation time spent starts getting appreciated as being in the same order of magnitude of cost as this potentially missed ultimate saving.

In such an embodiment, the following procedure may be applied:

1. Calculating for each function i of the service graph, its "placement inertia" likelihood; and

2. Ranking the functions, starting with highest inertia likelihood first, and executing for each function the following procedure:

a. Calculating a "pseudo-cost" for each placement option for this function. Note that a limited number of engines may be considered possible for the function, potentially limiting the expense of this step to the calculation for a few placement options only.

b. Preferably assuming the placement hypothesis for this function as a fact in the next function step. The highest inertia ordering heuristically minimizes the influence of later function placement options on the earlier taken hypothesis for the higher-inertia functions.

3. Calculating the real total cost estimate assuming the hypothesis placement options. The deviation of the real cost from the pseudo cost may be used as an indication of the success of the heuristic, and as a confirmation of robustness of the identified "placement inertia".

In the above described procedure we estimate the "pseudo-cost" as the cost being the sum of:

- an estimate of the total processing cost for the function when deployed in a given place, as a function of the average stream volumes expected for all its input and output flows based on the service graph's PRM-derived volume estimation data, as is done in the formulas (1d) and (2) as presented earlier, but limited to the processing resources for the particular function i; and

- an estimate of the total transport cost, summing over the transport cost for each of the abstract input and output edges that the function has in the logical service graph, i.e. as in figure 3A, as opposed to figure 3B. For each such edge this comprises summing over all the service graph's PRM-derived volume estimation data, as is done in the formulas (1d) and (2) above. However, in this embodiment, this is now limited to only transport costs, down to the aggregated edges of involved source and sink types at the fixed NPoP boundaries of the network, i.e. of which the 'place' is fixed. The estimate uses an average network transport cost factor and multiplies the PRM-based volume estimates with a length or average length of network route to sources and sinks, which can be calculated for each given service graph sub-tree by means of standard network routing algorithm approaches. This is a cost estimate that deliberately ignores the actual placement of the other functions in the graph, approximating those to be optimally placed with respect to network routing. This heuristic assumes that the "pseudo-cost" calculated as such, will guide the placement. In other words, the heuristic is thus especially applicable in the case of uniform processing cost throughout the network, but may show to provide reasonable speed-up in other cases.

In the above described procedure the "placement inertia" likelihood is calculated by:

- summing over the logical service graph as in the transport cost formulation for the pseudo-cost calculation above, the placement inertia likelihood estimate sums over "placement attraction strength" of each involved edge. This "placement attraction strength" is estimated as, or at least being proportional to, the estimated average link cost, divided by an NPoP-fan-out-wideness estimate, such as the mean deviation of the distribution of the sources and/or sinks involved in the service graph.

The above can be understood to be analogous to the force effect of strings, from each involved NPoP, on the position of the concerned node or function. In such analogy, placement processing cost for a function can be seen to correspond to the height of hills relative to the surrounding NPoPs which are at ground level.

Although the above description was mainly concerned with data-based services having a deterministic set of semantic concepts and especially source and/or sink NPoPs, embodiments of the allocation method according to the invention are equally applicable when a service graph representing a data-based service is dynamic. In other words, the allocation method can similarly be applied when several subgraphs of the same graph are deployed/not deployed or activated/deactivated at execution time. This can be modelled by a logical graph in which:

- all the subgraphs that are to be dynamically added or removed from the actual service graph at run-time are considered as present, i.e. all simultaneously; and
- their stream volume sizing is estimated as before based on PRM derivations, but preferably an additional weighting is applied, corresponding to their occurrence likelihood at any time during the service lifetime.

Dynamic sub-graph (de)activation is mostly based explicitly or implicitly on additional observations. For example using 'time' as a deployment trigger, may be done using the system's internal clock without explicit real-world observation. This way, probabilistic properties of a world model concept, and also the likelihood of its occurrence, can be derived from the PRM data, which allows for the calculation of the needed weighting.

This allows for the complete method to be used to predetermine the to-be-used placement for dynamic subgraphs of a service.

In a further embodiment, the allocation method is combinable with run-time placement decisions, in two possible ways, or combinations or intermediates of those:

- The placement procedure can be re-iterated, thereby potentially using the initial pre-execution or previous placement solution, at the time of each resource occupation change, wherein each new service instance addition to the service collection has an impact on the resource pool, or upon dynamic sub-graph changes.
- The placement procedure is not entirely repeated, but only recalculates where impacted by the change trigger, and is only performed when a large enough change in service or resource pool has occurred. For example, a data center is added or resource scarcity is nearing problematic thresholds in multiple places, or a large percentage of new service instances is added to the service collection.

As is clear from the description of the allocation method according to the invention, the allocation method allows to do placement in a real-world informed way. The benefit of this goes well beyond the mere tuning of distribution. Cases can occur where auto-localization of major service processing parts is obtained. The simplest examples are where data stream sources and/or sinks used by a particular service are statistically very localized to particular NPoPs, and were embodiments of the allocation method thus can automate the decision on which service processing parts to place locally near these NPoPs, e.g. on devices, on wireless base stations, or edge cloud data centers, and which parts are cost-wise justified to still place in a central cloud.

The earlier mentioned benefits can lead to resource spending savings of at least a factor two in illustrative cases, without violation of service quality and/or latency requirements.

Although embodiments of the allocation method according to the invention can be applied in an autonomous way, it is clear to the skilled person that the described embodiments can also be applied in combination with known placement algorithms or resource allocation methods, thereby improving at least one of speed, amount of resources used and resource allocation of the known placement algorithms or resource allocation methods.

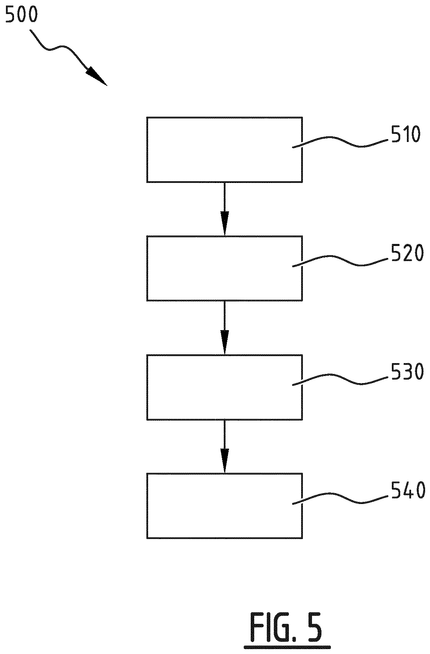

Figure 5 schematically illustrates an allocation system 500 for allocating network resources to a data-based service, wherein the data-based service comprises at least one service operation configured to receive operation input data and to generate operation output data based on said operation input data. The allocation system 500 comprises a real-world determination unit 510 configured for determining real-world information related to functionality of said operation; an output estimating unit 520 configured for estimating a volume of at least one of the operation input data and the operation output data of the at least one service operation based on said determined real-world information. The allocation system 500 further comprises a resource estimating unit 530 configured for estimating a network resource requirement of said at least one service operation based on said estimated output data volume; and a resource allocating unit 540 configured for allocating network resources to said at least one service operation based on said estimated network resource requirement of said at least one service operation.

The units 510, 520, 530 and 540 of the allocation system 500 are configured to at least perform the according steps 110, 120, 130 and 140, respectively, of the allocation method according to figure 1 which have been described in full detail. For this reason, and for the sake of brevity, a detailed description of the allocation system 500 is considered obsolete and has therefore been omitted.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

**Claims**

1.  Allocation method for allocating network resources to a data-based service, wherein the data-based service comprises at least one service operation configured to receive operation input data and to generate operation output data based on said operation input data, said allocation method comprising:

    - determining real-world information related to functionality of said service operation;
    - estimating a volume of at least one of the operation input data and the operation output data of the at least one service operation based on said determined real-world information;
    - estimating a network resource requirement of said at least one service operation based on said estimated operation output data volume; and
    - allocating network resources to said at least one service operation based on said estimated network resource requirement of said at least one service operation.

2.  Allocation method according to claim 1, wherein determining real-world information related to functionality of said service operation comprises determining at least one semantic concept which is related to functionality of said service operation.

3.  Allocation method according to claim 2, wherein determining real-world information comprises determining a probability of the at least one semantic concept, and wherein estimating the volume of the at least one of the operation input data and the operation output data of the at least one service operation is based on said determined probability.

4.  Allocation method according to claim 2 or 3, wherein the at least one semantic concept comprises a plurality of semantic concepts related to the functionality of said operation and wherein determining real-world information pertaining to the at least one semantic concept related to the functionality of said operation comprises determining a probabilistic relation between at least a first and a second semantic concept from among the plurality of semantic concepts, and wherein estimating the volume of the at least one of the operation input data and the operation output data of the at least one service operation is based on said determined probabilistic relation.

5.  Allocation method according to any one of the preceding claims 2 to 4, wherein determining real-world information comprises determining a probabilistic relation between the at least one semantic concept and at least one geographical location.

6.  Allocation method according to claim 5, wherein the data-based service comprises generating the operation input data based on real-world sensor data originating from an origin which is related to said at least one geographical location, wherein the allocation method comprises estimating the volume of at least one of the operation input data and the operation output data based on the determined probabilistic relation.

7. Allocation method according to any one of the preceding claims, further comprising estimating a service latency requirement of the data-based service; and wherein allocating network resources to the at least one operation service is based on said estimated service latency requirement.

8. Allocation method according to any one of the preceding claims, wherein allocating network resources comprises allocating at least one of available processing resources, transport resources and storage resources to said at least one service operation.

9. Allocation method according to any one of the preceding claims, further comprising:

   - comparing the estimated resource requirement of the at least one service operation, with network resources which are available at a network node; and
   - allocating network resources of said network node and network resources of at least another network node to the at least one service operation when the estimated resource requirements are greater than the available network resources at said network node.

10. Allocation method according to any one of the preceding claims, comprising:

   - dividing functionality of the at least one service operation into at least a first sub-operation and a second sub-operation; and
   - allocating resources of a first network node to said first sub-operation and allocating resources of a second network node to said second sub-operation.

11. Allocation system for allocating network resources to a data-based service, wherein the data-based service comprises at least one service operation configured to receive operation input data and to generate operation output data based on said operation input data, said allocation system comprising:

   - a real-world determination unit configured for determining real-world information related to functionality of said operation;
   - an output estimating unit configured for estimating a volume of at least one of the operation input data and the operation output data of the at least one service operation based on said determined real-world information;
   - a resource estimating unit configured for estimating a network resource requirement of said at least one service operation based on said estimated output data volume;
   - a resource allocating unit configured for allocating network resources to said at least one service operation based on said estimated network resource requirement of said at least one service operation.

12. Allocation system according to claim 11, wherein the real-world determination unit is configured for determining a probability of at least one semantic concept related to functionality of said at least one service operation, and wherein the output estimating unit is configured for estimating the volume of the at least one of the operation input data and the operation output data of the at least one service operation based on said determined probability.

13. Allocation system according to claim 12, wherein the at least one semantic concept comprises a plurality of semantic concepts related to the functionality of said operation and wherein the real-world determination unit is configured for determining a probabilistic relation between at least a first and a second semantic concept from among the plurality of semantic concepts.

14. Allocation system according to claim 12 or 13, wherein the real-world determination unit is configured for determining a probabilistic relation between the at least one semantic concept and at least one geographical location.

15. A computer program product comprising computer-executable instructions for performing the method of any one of the claims 1-10, when the program is run on a computer.

100

110

determining
real-world
information

120

estimating volume
of operation
output data

130

estimating
network
resource
requirement

140

allocating
network
resources

FIG. 1

FIG. 2A

FIG. 2B

**FIG. 3A**

**FIG. 3B**

EP 3 367 240 A1

300

P1    P2    P3    P4

315    320    317    330

311    310    316    321    322    325    331

**FIG. 3C**

s(u)    q(u)

u

p(u)

**FIG. 4**

500

510

520

530

540

## FIG. 5

Europäisches
Patentamt

European
Patent Office

Office européen
des brevets

## EUROPEAN SEARCH REPORT

Application Number

EP 17 15 8173

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 053 786 A2 (ROCKWELL AUTOMATION TECH INC [US]) 29 April 2009 (2009-04-29)<br>* abstract *<br>* figures 1, 2, 4, 5, 7, 9a *<br>* paragraph [0002] - paragraph [0015] *<br>* paragraph [0029] - paragraph [0032] *<br>* paragraph [0040] - paragraph [0055] *<br>----- | 1-15 | INV.<br>G06F9/50 |
| A | US 2013/080653 A1 (SANTOSUOSSO JOHN M [US] ET AL) 28 March 2013 (2013-03-28)<br>* the whole document *<br>----- | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 25 August 2017 | Wirtz, Hanno |

EPO FORM 1503 03.82 (P04C01)

## ANNEX TO THE EUROPEAN SEARCH REPORT
## ON EUROPEAN PATENT APPLICATION NO.

EP 17 15 8173

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2017

| Patent document cited in search report | | Publication date | Patent family member(s) | | Publication date |
|---|---|---|---|---|---|
| EP 2053786 | A2 | 29-04-2009 | CN | 101441467 A | 27-05-2009 |
| | | | CN | 104635686 A | 20-05-2015 |
| | | | EP | 2053786 A2 | 29-04-2009 |
| | | | US | 2009089325 A1 | 02-04-2009 |
| US 2013080653 | A1 | 28-03-2013 | US | 2013031335 A1 | 31-01-2013 |
| | | | US | 2013080653 A1 | 28-03-2013 |

EPO FORM P0459

For more details about this annex : see Official Journal of the European Patent Office, No. 12/82